# FASCICULE DE BREVET EUROPEEN

(11) **EP 3 100 903 B1**
(45) Date de publication et mention de la délivrance du brevet: **29.11.2017**
(21) Numéro de dépôt: 16171061.1
(22) Date de dépôt: 24.05.2016
(51) Int. Cl.: B60N 2/42, B60N 2/16, B60N 2/24, B60N 2/38, F41H 7/04

(54) **NACELLE DE VEHICULE PIVOTANTE PERMETTANT UN REGLAGE DE POSTURE**
SCHWENKBARE FAHRZEUGGONDEL, DIE EINE HALTUNGSREGULIERUNG ERLAUBT
PIVOTING VEHICLE NACELLE ALLOWING POSTURE ADJUSTMENT

(30) Priorité: 26.05.2015 FR 1501085
(43) Date de publication de la demande: 07.12.2016
(73) Titulaire: NEXTER Systems, 42328 Roanne (FR)
(72) Inventeur: GERMENOT, Olivier, 18023 BOURGES CEDEX (FR); CIRIA, Samuel, 18023 BOURGES CEDEX (FR)
(74) Mandataire: Cabinet Chaillot

(56) Documents cités:
- EP-A1- 1 995 111
- EP-A1- 2 727 762
- EP-A2- 1 052 140
- US-A- 4 593 875

## Description

Le domaine technique de l'invention est celui des nacelles destinées à recevoir les passagers d'un véhicule susceptibles de subir des chocs de mines.

En cas de choc violent sous le plancher d'un véhicule, l'énergie du choc est répercutée via la caisse du véhicule sur les passagers. Cette énergie est dommageable pour les passagers et elle est transmise avec une brutalité d'autant plus forte que la caisse du véhicule est raide. Ainsi sur un véhicule militaire comportant une caisse blindée, la raideur est particulièrement élevée et en cas d'accident ou d'agression de type mine ou encore d'engin explosif improvisé, les passagers voient leurs vies mises en danger.

Pour remédier à cela, il est connu de découpler les passagers de la caisse du véhicule au moyen de nacelles portant les passagers et les équipements de bord.

La demande de brevet européen EP 2 727 762 A1 divulgue une nacelle de véhicule qui, selon un mode de réalisation particulier, permet d'une part d'assurer l'absorption de l'énergie d'un choc sur le véhicule au niveau du poste d'un pilote ou d'un passager et, d'autre part, d'avoir une position tête rentrée ou une position tête sortie pour le poste du pilote ou passager.

La nacelle selon EP 2 727 762 A1 comprend une armature rigide qui est suspendue à la caisse du véhicule par un dispositif de fixation situé au voisinage d'une première extrémité de l'armature et fixé au plafond de la caisse, un siège étant porté par l'armature à la seconde extrémité de celle-ci. Le dispositif de fixation comporte une articulation d'axe de rotation transversal à l'axe longitudinal de la nacelle et au moins un moyen moteur configuré pour faire pivoter l'armature autour de l'articulation afin de lever ou d'abaisser la nacelle par rapport à la caisse et ainsi de la faire passer entre la position tête rentrée et la position tête sortie.

Cependant, ce type de nacelle suspendue ne tient pas compte des différences de stature entre les personnes susceptibles de s'y installer. En effet, si la nacelle a été conçue pour une personne de grande stature, alors une personne de plus petite stature n'aura pas la totalité de sa tête sortie dans la position tête sortie et ne pourra pas utiliser correctement la nacelle. De la même manière, si la nacelle a été conçue pour une personne de petite stature, la nacelle ne pourra pas être occupée par une personne de plus grande stature.

Ce type de nacelle doit par ailleurs se loger dans un volume réduit, ce qui interdit l'utilisation de sièges standard réglables en hauteur.

Le brevet européen EP 1 995 111 divulgue une nacelle de véhicule selon le préambule de la revendication 1.

Ainsi, la présente invention vise à proposer une nacelle pivotante entre une position tête rentrée et une position tête sortie qui permet un réglage de posture pour un utilisateur donné en fonction de la stature dudit utilisateur, tout en pouvant se loger dans un volume réduit.

La présente invention a pour objet une nacelle de véhicule destinée à être occupée par au moins un passager, la nacelle étant destinée à être liée à la caisse du véhicule par un dispositif de fixation qui est situé au voisinage d'une première extrémité de la nacelle, la nacelle comprenant au moins un siège pour passager placé au voisinage d'une seconde extrémité de la nacelle, opposée à ladite première extrémité selon un axe longitudinal de la nacelle, le dispositif de fixation étant configuré pour autoriser un pivotement de la nacelle autour d'un axe de pivotement horizontal orthogonal à l'axe longitudinal de la nacelle et la nacelle comportant au moins un premier moyen moteur configuré pour faire pivoter la nacelle autour dudit axe de pivotement afin de lever ou d'abaisser la seconde extrémité de la nacelle par rapport à la caisse du véhicule entre une position abaissée dite tête rentrée et une position relevée dite tête sortie, la nacelle comprenant un corps de nacelle, qui porte le siège passager et auquel le dispositif de fixation est destiné à être relié, et un dispositif de réglage de posture par l'intermédiaire duquel la seconde extrémité de la nacelle est destinée à être liée à la caisse du véhicule, caractérisée par le fait que le dispositif de réglage de posture est lié d'une part au corps de nacelle par des premiers moyens de liaison autorisant un pivotement du corps de nacelle autour dudit axe de pivotement sans déplacement vertical relatif entre le dispositif de réglage de posture et la caisse du véhicule et, d'autre part, à la caisse par des seconds moyens de liaison autorisant, dans une configuration dite de libération, un pivotement d'un seul tenant du corps de nacelle et du dispositif de réglage de posture par rapport à la caisse autour de l'axe de pivotement.

Ainsi, avec la nacelle selon la présente invention, on règle la posture du passager en faisant pivoter le corps de nacelle tout en empêchant le dispositif de réglage de posture de se déplacer verticalement. Le passager peut ainsi adapter la hauteur du siège à sa stature pour être correctement placé dans la position tête rentrée.

Lorsque l'on doit passer de la position tête rentrée à la position tête sortie, il suffit de placer les seconds moyens de liaison dans la configuration de libération puis de faire pivoter l'ensemble de la nacelle, y compris le dispositif de réglage de posture. Etant donné que dans ce cas le corps de nacelle et le dispositif de réglage de posture sont déplacés d'un seul tenant, on conserve le réglage de posture effectué en position tête rentrée.

De préférence, les seconds moyens de liaison comprennent des moyens de blocage de la nacelle dans l'une ou l'autre de la position tête rentrée et de la position tête sortie, lesquels moyens de blocage comprennent d'une part au moins une butée basse et au moins une butée haute destinées à être fixées à la caisse du véhicule et, d'autre part, au moins un organe de solidarisation porté par le dispositif de réglage de posture et configuré pour verrouiller de manière libérable la nacelle à l'une ou l'autre parmi l'au moins une butée basse et l'au moins une butée haute, les butées basse(s) et haute(s) étant positionnées pour correspondre respectivement à la position tête rentrée et à la position tête sortie. Cette structure des seconds moyens de liaison permet un affalement rapide entre position tête sortie et position tête rentrée, tout en assurant le maintien d'une sécurité anti-mines.

Le ou chaque organe de solidarisation est avantageusement déplaçable entre une position étendue, dans laquelle il est apte à être engagé dans la butée basse respective ou la butée haute respective, et une position escamotée dans laquelle il est désengagé de la butée basse ou de la butée haute pour permettre le pivotement d'un seul tenant du corps de nacelle et du dispositif de réglage de posture par rapport à la caisse, avec de préférence des moyens de sollicitation élastique du ou des organes de solidarisation vers la position étendue et des moyens de déverrouillage actionnables pour déplacer le ou les organes de solidarisation vers la position escamotée, à l'encontre de l'action desdits moyens de sollicitation élastique.

La ou chacune des butées basse(s) et haute(s) présente une rainure, de préférence en V, dont la direction longitudinale est horizontale et orthogonale à l'axe de pivotement, et que le ou chaque organe de solidarisation a une extrémité libre de forme configurée pour que l'organe de solidarisation soit reçu dans la rainure à rotation autour d'un axe horizontal et parallèle à l'axe de pivotement.

Les seconds moyens de liaison peuvent comprendre deux butées basses, destinées à être disposées de part et d'autre de la nacelle, et une seule butée haute, le dispositif de réglage de posture portant deux organes de solidarisation.

Selon un mode de réalisation particulier, le dispositif de réglage de posture comprend un corps et les premiers moyens de liaison sont formés par au moins une liaison hélicoïdale comprenant une vis, portée à rotation par ledit corps et orthogonale à l'axe longitudinal de la nacelle, et un écrou solidaire de la seconde extrémité du corps de nacelle et bloqué en rotation, étant prévu au moins un second moyen moteur destiné à faire tourner la ou les vis pour faire monter ou descendre le ou les écrous le long de la ou des vis, en fonction du sens de rotation de la ou des vis, et ainsi faire pivoter le corps de nacelle autour de l'axe de pivotement, les seconds moyens de liaison étant formés par au moins une liaison pivot glissant d'axe de pivotement horizontal et parallèle à l'axe de pivotement, et de direction de translation horizontale et orthogonale à l'axe de pivotement, ladite au moins une liaison pivot glissant étant le cas échéant formée par la ou les butées basse (s) et haute (s) et le ou les organes de solidarisation.

Les premiers moyens de liaison peuvent comprendre deux liaisons hélicoïdales disposées de manière symétrique par rapport à l'axe longitudinal de la nacelle, les vis étant reliées par des moyens de transmission de la rotation de l'une des vis, commandée par le second moyen moteur, à l'autre vis.

L'au moins un premier moyen moteur peut être un vérin linéaire dont le corps et la tige sont articulés respectivement à la caisse et à la nacelle, ou inversement, de façon à être apte à tourner autour d'un axe de pivotement horizontal et parallèle à l'axe de pivotement, le vérin étant lié, de préférence et le cas échéant, à un côté du corps du dispositif de réglage de posture et une paroi latérale de la caisse.

De préférence, le vérin linéaire est à l'échappement dans la position tête sortie et/ou l'extrémité libre du ou de chaque organe de solidarisation est effilée en présentant ainsi des côtés supérieur et inférieur inclinés de telle sorte que le ou chaque organe de solidarisation est déplacé de la position étendue vers la position escamotée lorsqu'il vient en contact avec une butée basse ou une butée haute suite à un pivotement de la nacelle.

Dans cette configuration, un simple déverrouillage en butée haute permet à la nacelle de descendre par gravité et la nacelle arrête sa course lorsqu'elle se verrouille sur la ou les butées basses.

La nacelle peut comporter en outre au moins un moyen cassable sous l'action d'un choc de mine, moyen cassable solidarisant la nacelle avec la caisse du véhicule, moyen cassable situé de préférence au niveau de l'organe de solidarisation ou de la butée associée.

Le moyen cassable pourra avantageusement être constitué par l'organe de solidarisation lui-même qui sera conformé en une goupille cisaillable. Un moyen cassable pourra de façon alternative être disposé au niveau des butées elles-mêmes (la butée haute et la butée basse).

Pour mieux illustrer l'objet de la présente invention, on va en décrire ci-après, à titre indicatif et non limitatif, un mode de réalisation particulier avec référence aux dessins annexés.

Sur ces dessins :
- la Figure 1 est une vue en perspective de trois quarts d'une nacelle selon la présente invention ;
- la Figure 2 est une vue schématique de l'arrière de la nacelle selon la présente invention, le siège ayant été omis ; et
- les Figures 3 à 6 sont des vues de la nacelle selon la présente invention, selon la coupe AA de la Figure 2, la nacelle étant représentée dans les positions respectivement tête rentrée basse, tête rentrée haute, tête sortie basse et tête sortie haute.

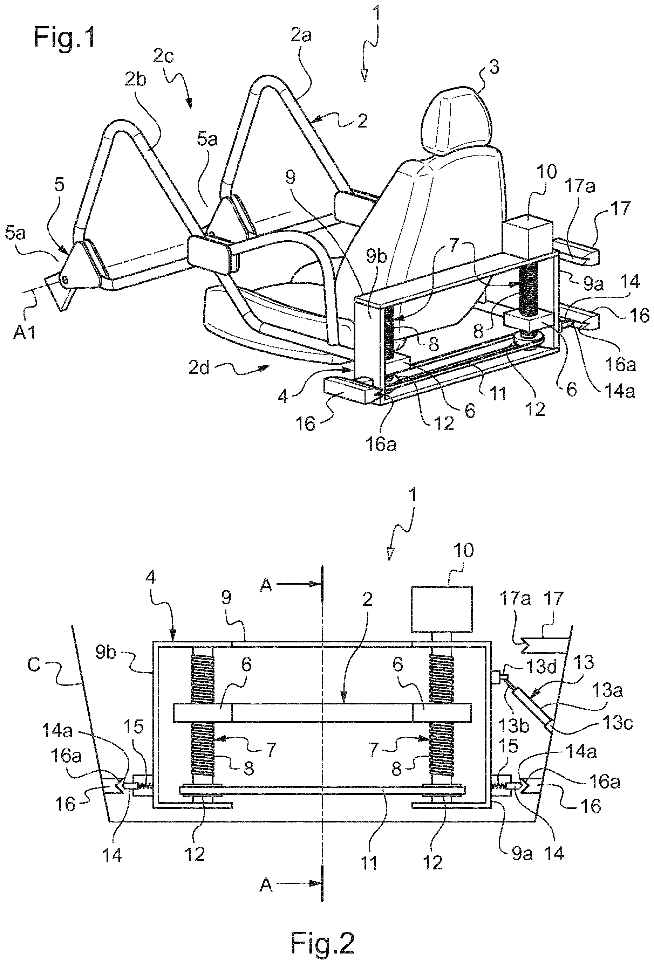

Si l'on se réfère aux Figures 1 et 2, on peut voir qu'une nacelle 1 pour véhicule (véhicule non représenté) comprend un corps de nacelle 2, portant un siège 3 pouvant être occupé par un passager, et un dispositif de réglage de posture 4 lié de manière mobile au corps de nacelle 2. A son extrémité avant la nacelle 1 est liée de façon pivotante à la caisse C du véhicule par un dispositif de fixation 5 consistant en deux articulations 5a (de type rotules) d'axe de rotation A1 transversal à la direction longitudinale du corps de nacelle 2. A son extrémité arrière la nacelle 1 est liée à la caisse C par l'intermédiaire du dispositif de réglage de posture 4.

Le corps de nacelle 2 comporte ici deux structures tubulaires 2a, 2b ayant chacune, à l'extrémité avant 2c, une partie coopérant avec une articulation 5 respective, et à l'extrémité arrière 2d, une partie formant écrou 6 par laquelle le corps de nacelle 2 est lié au dispositif de réglage de posture 4.

Le dispositif de réglage de posture 4 comprend un support mobile lié au corps de nacelle 2 par deux liaisons hélicoïdales 7, formant lesdits premiers moyens de liaison et formées chacune par une partie formant écrou 6 et une vis 8 sensiblement verticale et montée à rotation sur le corps 9 du support mobile, chaque partie formant écrou 6 étant montée à translation sur la vis 8 respective. On comprend aisément que les parties formant écrou 6 sont bloquées en rotation, du fait qu'elles sont d'un seul tenant au corps de nacelle 2, et sont donc déplacées en translation le long des vis 8 lorsque ces dernières tournent.

Un moyen moteur 10 est couplé à l'extrémité supérieure de l'une des vis 8 pour faire tourner cette dernière dans un sens ou dans l'autre. Le moyen moteur 10 peut être un moyen manuel, tel qu'une manivelle, ou un moteur, par exemple électrique.

La rotation de cette vis 8 est transmise à l'autre 8 par un moyen de transmission 11 de type courroie ou chaîne, enroulé sur deux poulies 12 chacune solidaire en rotation d'une vis 8 respective, en partie inférieure de ces dernières. Par conséquent, lorsque le moyen moteur 10 est actionné dans un premier sens de rotation, les parties formant écrou 6 sont déplacées vers le haut par rapport au corps 9, et lorsque le moyen moteur 10 est actionné dans l'autre sens de rotation, les parties formant écrou 6 sont déplacées vers le bas par rapport au corps 9.

Ce déplacement des parties formant écrou 6 se traduit par un pivotement du corps de nacelle 2 autour de l'axe A1, sans que le dispositif de réglage de posture 4 ne soit déplacé en hauteur. Comme cela sera explicité ci-après, ce pivotement du corps de nacelle 2 permet un réglage de posture de la nacelle 1.

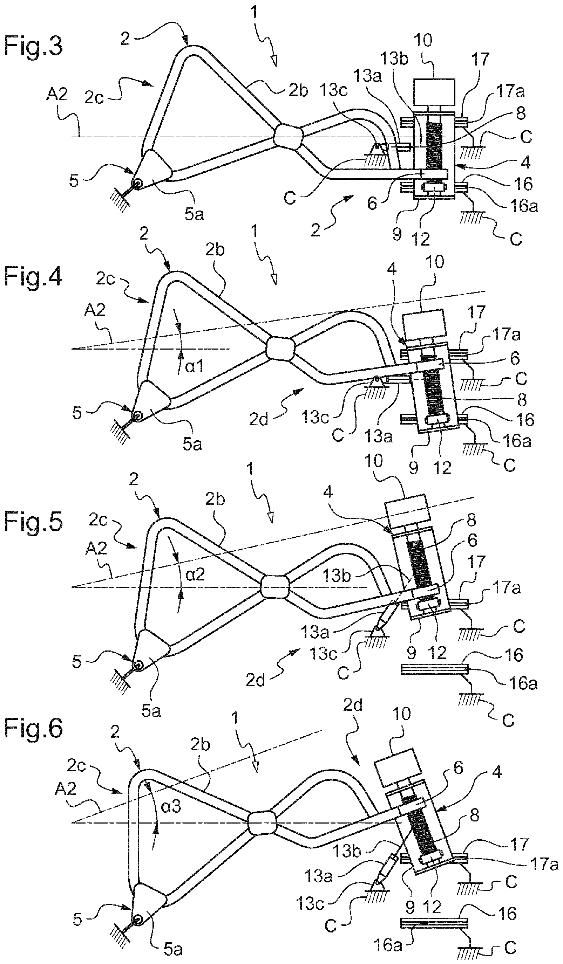

Un vérin 13 relie le dispositif de réglage de posture 4 et la caisse C, avec ici le corps 13a et la tige 13b du vérin 13 articulés respectivement à la caisse C et à un côté 9a du corps 9 par l'intermédiaire d'articulations 13c et 13d d'axes de rotation parallèles à l'axe A1. Le vérin 13 permet de faire pivoter la nacelle 1 autour de l'axe A1 entre la position tête rentrée (Figures 3 et 4) et la position tête sortie (Figures 5 et 6) par rétractation ou extension de la tige 13b du vérin 13. La nacelle 1 est libre, sur l'autre côté 9b du corps 9, pour permettre l'entrée et la sortie de l'utilisateur.

Dans le cas d'une articulation simple sur le côté 9a du corps 9, comme représenté sur les Figures, l'axe longitudinal du vérin 13 doit être, dans la position rétractée de la tige 13b, qui correspond à la position tête rentrée, au moins légèrement incliné vers le haut, de sorte que l'extension de la tige 13b se traduit par une poussée sur le dispositif de réglage de posture 4 qui est orientée vers le haut.

Bien entendu, le vérin 13 peut être positionné et orienté autrement, pourvu qu'il permette le pivotement de la nacelle 1 autour de l'axe A1. On pourra ainsi interposer le vérin 13 entre la caisse C et le corps de nacelle 2 par exemple.

Des moyens de blocage sont utilisés pour maintenir la nacelle 1 dans l'une ou l'autre desdites positions tête rentrée et tête sortie. Les moyens de blocage forment également lesdits seconds moyens de liaison et comprennent deux doigts 14, montés chacun sur ressort 15 et servant d'organes de solidarisation, deux butées basses 16, présentant chacune une rainure 16a en V, et une butée haute 17 présentant une rainure 17a en V.

Les doigts 14 se situent au bas des côtés 9a et 9b du corps 9, et s'étendent parallèlement à l'axe A1. L'extrémité libre 14a des doigts 14 est conique pour être complémentaire des rainures 16a.

Les butées basses 16 sont solidaires de la caisse C et sont disposées de chaque côté du dispositif de réglage de posture 4, avec la direction longitudinale des rainures 16a orthogonale à l'axe de rotation A1. En position tête rentrée, chaque rainure 16a est en regard du doigt 14 respectif.

La butée haute 17 est solidaire de la caisse C et la rainure 17a est à l'aplomb de la rainure 16a de la butée basse 16 qui se situe côté 9a du corps 9.

Les ressorts 15 constituent des moyens de sollicitation élastique des doigts 14 vers une position étendue, dans laquelle les doigts 14 peuvent être engagés dans la rainure 16a de la butée basse 16 respective ou dans la rainure 17a de la butée haute 17, selon que la nacelle 1 est en position tête rentrée ou en position tête sortie.

Du fait de la forme en V des rainures 16a et 17a et de la forme conique de l'extrémité libre 14a des doigts 14, le dispositif de réglage de posture 4 est relié à la caisse C, dans l'une ou l'autre des positions tête rentrée et tête sortie, par une liaison pivot glissant dont l'axe de rotation est l'axe longitudinal des doigts 14 et dont la direction de translation est la direction longitudinale des rainures 16a, 17a.

Sont en outre prévus des moyens de rétraction des doigts 14, configurés pour déplacer les doigts 14 à l'encontre des ressorts 15 vers une position escamotée dans laquelle ils sont désengagés des butées basses 16 ou de la butée haute 17, de façon à permettre le pivotement de la nacelle 1 entre la position tête rentrée et la position tête sortie. Ladite position escamotée correspond à la configuration de libération des seconds moyens de liaison. Ces moyens de rétraction peuvent par exemple être à câble ou des électro-aimants.

On souligne ici que, du fait de la forme conique de l'extrémité libre 14a des doigts 14, ces derniers sont automatiquement amenés de la position étendue, dans laquelle ils se trouvent au cours du pivotement entre les positions tête rentrée et tête sortie, à la position escamotée par contact de ladite extrémité libre 14a contre la butée basse 16 ou la butée haute 17, puis sont automatiquement engagés dans cette dernière lorsqu'ils sont en regard de la rainure 16a, 17a.

On va maintenant décrire plus en détail le réglage de posture et le réglage de position de la nacelle 1 avec référence aux Figures 3 à 6.

On se réfère tout d'abord à la Figure 3, sur laquelle on a représenté la nacelle 1 en position tête rentrée et avec le corps de nacelle 2 dans la position la plus basse par rapport au dispositif de réglage de posture 4. Les doigts 14 sont engagés dans les rainures 16a des butées basses 16, de telle sorte que la nacelle 1 est bloquée en position tête rentrée. Cette configuration des seconds moyens de liaison correspond à une configuration dite de blocage, dans laquelle ils relient le dispositif de réglage de posture 4 à la caisse C.

La position représentée sur la Figure 1 est désignée par position tête rentrée basse et correspondrait à une personne de grande posture, notamment 95ème centile masculin (centile est la désignation française correspondant à la désignation anglo-saxonne percentile). Ici, l'axe longitudinal A2 de la nacelle 1 est horizontal.

Si une seconde personne, de plus petite posture, souhaite s'installer dans le siège 3, sa position sera inconfortable et inadaptée.

Pour y remédier, il lui suffit d'actionner les moyens moteurs 10 pour faire pivoter le corps de nacelle 2 autour de l'axe de rotation A1, du fait de la montée des parties formant écrou 6 le long des vis 8. Les doigts 14 restent engagés dans les butées basses 16 et le dispositif de réglage de posture 4 reste donc à la même hauteur.

La seconde personne arrête d'actionner les moyens moteurs 10 lorsque le corps de nacelle 2 est dans une position de confort pour celle-ci, par exemple celle représentée sur la Figure 4. Dans cette position, dite tête rentrée haute, le corps de nacelle 2 a été pivoté au maximum vers le haut, ce qui dans l'exemple représenté correspond à un angle al de 6° par rapport à l'horizontale, ce qui conviendrait pour le 20^{ème} centile féminin.

Bien entendu, la seconde personne peut régler l'inclinaison du corps de nacelle 2 à n'importe quel angle entre les positions tête rentrée basse et tête rentrée haute. En d'autres termes, le réglage de posture est à résolution continue.

On peut souligner ici que le pivotement du corps de nacelle 2 autour des articulations 5 amène l'extrémité arrière 2d du corps de nacelle 2 à décrire un arc de cercle centré sur l'axe A1. Etant donné que les vis 8 sont rectilignes, il est nécessaire de compenser le décalage induit par la trajectoire de l'extrémité arrière 2d du corps de nacelle 2, afin d'éviter un blocage des différentes pièces. Cette compensation est réalisée par un glissement vers l'arrière des doigts 14 dans les rainures 16a, ce qui provoque une rotation du dispositif de réglage de posture 4 autour du point d'articulation 13d du vérin 13 au dispositif de réglage de posture 4, comme le montre la Figure 4 sur laquelle le dispositif de réglage de posture 4 a été incliné par rapport à sa position initiale sur la Figure 3.

Afin de passer en position tête haute, et ce quelle que soit la stature de la personne installée dans le siège 3 et le réglage de posture du corps de nacelle 2, la personne déverrouille les doigts 14 des butées basses 16 à l'aide des moyens de déverrouillage, faisant ainsi passer les seconds moyens de liaison dans la configuration de libération, puis actionne le vérin 13 pour qu'il pousse la nacelle 1, c'est-à-dire à la fois le corps de nacelle 2 et le dispositif de réglage de posture 4, vers le haut, faisant ainsi pivoter la nacelle 1 autour de l'axe A1 jusqu'à la position tête sortie, où le doigt 14 côté 9a s'engage automatiquement dans la rainure 17a de la butée haute 17. La nacelle 1 est alors bloquée en position tête sortie.

Etant donné que le passage de la position tête rentrée à la position tête sortie implique le déplacement d'un seul tenant de la nacelle 1, à savoir du corps de nacelle 2 et du dispositif de réglage de posture 4, le réglage de posture du corps de nacelle 2 est conservé entre la position tête rentrée et tête sortie.

Ainsi, même en position tête sortie, la personne de grande stature conservera un réglage avec un corps de nacelle 2 en position basse par rapport au dispositif de réglage de posture 4, comme le montre la Figure 5 (position tête sortie basse), ce qui correspond ici à un angle α2 de 10° par rapport à l'horizontale (95° centile masculin), et la personne de plus petite stature (20° centile féminin) conservera un réglage avec un corps de nacelle 2 en position haute par rapport au dispositif de réglage de posture 4, comme le montre la Figure 6 (position tête sortie haute), ce qui correspond ici à un angle α3 de 20°.

En cas d'urgence il est possible de faire passer rapidement la nacelle d'une position haute à une position basse. Il suffit pour cela de déverrouiller le doigt 14 côté 9a de la butée haute 17.

Le vérin 13 électro-hydraulique utilisé est naturellement à l'échappement lorsqu'il est arrivé à sa position d'extension maximale (position du distributeur de commande du vérin en fin de course). Il ne bloque donc pas la descente de la nacelle qui, une fois libérée, revient en position basse par l'effet de la gravité.

Il est bien entendu que le mode de réalisation ci-dessus de la présente invention a été donné à titre indicatif et non limitatif et que des modifications pourront y être apportées sans que l'on s'écarte pour autant du cadre de la présente invention.

## Revendications

1. Nacelle (1) de véhicule destinée à être occupée par au moins un passager, la nacelle (1) étant destinée à être liée à la caisse (C) du véhicule par un dispositif de fixation (5) qui est situé au voisinage d'une première extrémité (2c) de la nacelle (1), la nacelle (1) comprenant au moins un siège (3) pour passager placé au voisinage d'une seconde extrémité (2d) de la nacelle (1), opposée à ladite première extrémité (2c) selon un axe longitudinal (A2) de la nacelle (1), le dispositif de fixation (5) étant configuré pour autoriser un pivotement de la nacelle (1) autour d'un axe de pivotement (A1) horizontal orthogonal à l'axe longitudinal (A2) de la nacelle (1) et la nacelle (1) comportant au moins un premier moyen moteur (13) configuré pour faire pivoter la nacelle (1) autour dudit axe de pivotement (A1) afin de lever ou d'abaisser la seconde extrémité (2d) de la nacelle (1) par rapport à la caisse (C) du véhicule entre une position abaissée dite tête rentrée et une position relevée dite tête sortie, la nacelle (1) comprenant un corps de nacelle (2), qui porte le siège passager (3) et auquel le dispositif de fixation (5) est destiné à être relié, et un dispositif de réglage de posture (4) par l'intermédiaire duquel la seconde extrémité (2d) de la nacelle (1) est destinée à être liée à la caisse (C) du véhicule, **caractérisée par le fait que** le dispositif de réglage de posture (4) est lié d'une part au corps de nacelle (2) par des premiers moyens de liaison (7) autorisant un pivotement du corps de nacelle (2) autour dudit axe de pivotement (A1) sans déplacement vertical relatif entre le dispositif de réglage de posture (4) et la caisse (C) du véhicule et, d'autre part, à la caisse (C) par des seconds moyens de liaison (14, 16, 17) autorisant, dans une configuration dite de libération, un pivotement d'un seul tenant du corps de nacelle (2) et du dispositif de réglage de posture (4) par rapport à la caisse (C) autour de l'axe de pivotement (A1) .

2. Nacelle (1) de véhicule selon la revendication 1, **caractérisée par le fait que** les seconds moyens de liaison (14, 16, 17) comprennent des moyens de blocage de la nacelle (1) dans l'une ou l'autre de la position tête rentrée et de la position tête sortie, lesquels moyens de blocage comprennent d'une part au moins une butée basse (16) et au moins une butée haute (17) destinées à être fixées à la caisse (C) du véhicule et, d'autre part, au moins un organe de solidarisation (14) porté par le dispositif de réglage de posture (4) et configuré pour verrouiller de manière libérable la nacelle (1) à l'une ou l'autre parmi l'au moins une butée basse (16) et l'au moins une butée haute (17), les butées basse(s) (16) et haute(s) (17) étant positionnées pour correspondre respectivement à la position tête rentrée et à la position tête sortie.

3. Nacelle (1) de véhicule selon la revendication 2, **caractérisé par le fait que** le ou chaque organe de solidarisation (14) est déplaçable entre une position étendue, dans laquelle il est apte à être engagé dans la butée basse respective (16) ou la butée haute respective (17), et une position escamotée dans laquelle il est désengagé de la butée basse (16) ou de la butée haute (17) pour permettre le pivotement d'un seul tenant du corps de nacelle (2) et du dispositif de réglage de posture (4) par rapport à la caisse (C), avec de préférence des moyens de sollicitation élastique (15) du ou des organes de solidarisation (14) vers la position étendue et des moyens de déverrouillage actionnables pour déplacer le ou les organes de solidarisation (14) vers la position escamotée, à l'encontre de l'action desdits moyens de sollicitation élastique (15).

4. Nacelle (1) de véhicule selon l'une des revendications 2 et 3, **caractérisée par le fait que** la ou chacune des butées basse(s) (16) et haute(s) (17) présente une rainure (16a, 17a), de préférence en V, dont la direction longitudinale est horizontale et orthogonale à l'axe de pivotement (A1), et que le ou chaque organe de solidarisation (14) a une extrémité libre (14a) de forme configurée pour que l'organe de solidarisation (14) soit reçu dans la rainure (16a, 17b) à rotation autour d'un axe horizontal et parallèle à l'axe de pivotement (A1).

5. Nacelle (1) de véhicule selon l'une des revendications 2 à 4, **caractérisée par le fait que** les seconds moyens de liaison (14, 16, 17) comprennent deux butées basses (16), destinées à être disposées de part et d'autre de la nacelle (1), et une seule butée haute (17), le dispositif de réglage de posture (4) portant deux organes de solidarisation (14).

6. Nacelle (1) de véhicule selon l'une des revendications 2 à 5, **caractérisée par le fait que** le dispositif de réglage de posture (4) comprend un corps (9) et que les premiers moyens de liaison (7) sont formés par au moins une liaison hélicoïdale (7) comprenant une vis (8), portée à rotation par ledit corps (9) et orthogonale à l'axe longitudinal (A2) de la nacelle (1), et un écrou (6) solidaire de la seconde extrémité (2d) du corps de nacelle (2) et bloqué en rotation, étant prévu au moins un second moyen moteur (10) destiné à faire tourner la ou les vis (8) pour faire monter ou descendre le ou les écrous (6) le long de la ou des vis (8), en fonction du sens de rotation de la ou des vis (8), et ainsi faire pivoter le corps de nacelle (2) autour de l'axe de pivotement (A1), les seconds moyens de liaison (14, 16, 17) étant formés par au moins une liaison pivot glissant d'axe de pivotement horizontal et parallèle à l'axe de pivotement (A1), et de direction de translation horizontale et orthogonale à l'axe de pivotement (A1), ladite au moins une liaison pivot glissant étant formée par la ou les butées basse(s) (16) et haute(s) (17) et le ou les organes de solidarisation (14).

7. Nacelle (1) de véhicule selon la revendication 6, **caractérisée par le fait que** les premiers moyens de liaison (7) comprennent deux liaisons hélicoïdales (7) disposées de manière symétrique par rapport à l'axe longitudinal (A2) de la nacelle (1), les vis (8) étant reliées par des moyens de transmission (11, 12) de la rotation de l'une des vis (8), commandée par le second moyen moteur (10), à l'autre vis (8).

8. Nacelle (1) de véhicule selon l'une des revendications 1 à 7, **caractérisée par le fait que** l'au moins un premier moyen moteur (13) est un vérin linéaire (13) dont le corps (13a) et la tige (13b) sont articulés respectivement à la caisse (C) et à la nacelle (1), ou inversement, de façon à être apte à tourner autour d'un axe de pivotement horizontal et parallèle à l'axe de pivotement (A1), le vérin (13) étant lié, de préférence et le cas échéant, à un côté (9a) du corps (9) du dispositif de réglage de posture (4) et une paroi latérale de la caisse (C) .

9. Nacelle (1) de véhicule selon la revendication 8, **caractérisée par le fait que** le vérin linéaire (13) est à l'échappement dans la position tête sortie.

10. Nacelle (1) de véhicule selon l'une des revendications 2 à 9, **caractérisée par le fait que** l'extrémité libre (14a) du ou de chaque organe de solidarisation (14) est effilée en présentant ainsi des côtés supérieur et inférieur inclinés de telle sorte que le ou chaque organe de solidarisation (14) est déplacé de la position étendue vers la position escamotée lorsqu'il vient en contact avec une butée basse (16) ou une butée haute (17) suite à un pivotement de la nacelle (1).

11. Nacelle (1) de véhicule selon l'une des revendications 1 à 10, **caractérisée par le fait qu'**elle comporte au moins un moyen cassable sous l'action d'un choc de mine, moyen cassable solidarisant la nacelle (1) avec la caisse (C) du véhicule, moyen cassable situé de préférence au niveau de l'organe de solidarisation (14) ou de la butée (16, 17) associée.

## Patentansprüche

1. Fahrzeuggondel (1) für mindestens einen Fahrgast, die mit der Karosserie (C) des Fahrzeugs verbunden werden soll, und zwar durch eine Befestigungsvorrichtung (5) in der Nähe eines ersten Endes (2c) der Gondel (1), wobei die Gondel (1) mindestens einen Sitz (3) für einen Fahrgast in der Nähe eines zweiten Endes (2d) der Gondel (1) umfasst, das dem ersten Ende (2c) gemäß einer Längsachse (A2) der Gondel (1) gegenüberliegt, wobei die Befestigungsvorrichtung (5) für eine Drehung der Gondel (1) um eine waagrechte Drehachse (A1) orthogonal zur Längsachse (A2) der Gondel (1) konfiguriert ist und die Gondel (1) mindestens eine erste Motoreinrichtung (13) aufweist, die konfiguriert ist, um die Gondel (1) um die Drehachse (A1) drehen zu lassen, um das zweite Ende (2d) der Gondel (1) im Vergleich zu der Karosserie (C) des Fahrzeugs zu heben oder zu senken, zwischen einer abgesenkten Position, genannt Kopf eingezogen, und einer erhobenen Position, genannt Kopf ausgezogen, wobei die Gondel (1) einen Gondelkörper (2) umfasst, der den Fahrgastsitz (3) trägt und mit dem die Befestigungsvorrichtung (5) verbunden werden soll, und eine Haltungsregulierung(4), mittels derer das zweite Ende (2d) der Gondel (1) mit der Karosserie (C) des Fahrzeugs verbunden werden soll, **gekennzeichnet dadurch, dass** die Haltungsregulierung (4) einerseits mit dem Gondelkörper (2) durch erste Verbindungsmittel (7) verbunden ist, die eine Drehung des Gondelkörpers (2) um die Drehachse (A1) ohne relative senkrechte Bewegung zwischen der Haltungsregulierung(4) und der Karosserie (C) des Fahrzeugs gestatten, und andererseits mit der Karosserie (C) durch zweite Verbindungsmittel (14, 16, 17), die, in einer Ausgestaltung, die Freigabe genannt wird, eine Gesamtdrehung des Gondelkörpers (2) und der Haltungsregulierung(4) im Vergleich zu der Karosserie (C) um die Drehachse (A1) gestatten.

2. Fahrzeuggondel (1) nach Anspruch 1, **gekennzeichnet dadurch, dass** die zweiten Verbindungsmittel (14, 16, 17) Blockierungsmittel für die Gondel (1) in der Position Kopf eingezogen oder der Position Kopf ausgezogen umfassen, wobei die Blockierungsmittel einerseits mindestens einen niedrigen Endanschlag (16) und mindestens einen hohen Endanschlag (17) umfassen, die an der Karosserie (C) des Fahrzeugs befestigt werden sollen, und andererseits mindestens ein Befestigungselement (14), das von der Haltungsregulierung(4) getragen wird und konfiguriert ist, um die Gondel (1) an dem mindestens einen niedrigen Endanschlag (16) oder dem mindestens einen hohen Endanschlag (17) lösbar zu verriegeln, wobei der/die niedrige(n) (16) und hohe(n) (17) Anschläge positioniert sind, um der Position Kopf eingezogen bzw. Position Kopf ausgezogen zu entsprechen.

3. Fahrzeuggondel (1) nach Anspruch 2, **gekennzeichnet dadurch, dass** das oder jedes Befestigungselement (14) verschiebbar ist zwischen einer ausgezogenen Position, in der es in der Lage ist, in den niedrigen Endanschlag (16) oder den hohen Endanschlag (17) eingeführt zu werden, und einer eingezogenen Position, in der es vom niedrigen Endanschlags (16) bzw. hohen Endanschlag (17) gelöst ist, um die Gesamtdrehung des Gondelkörpers (2) und der Haltungsregulierung(4) im Vergleich zu der Karosserie (C) zu gestatten, mit vorzugsweise elastischen Vorspannmitteln (15) für das oder die Befestigungselemente (14) in die ausgezogene Position und betätigbaren Entriegelungsmitteln zum Versetzen des oder der Befestigungselemente (14) in die eingezogene Position, entgegen der Wirkung der genannten elastischen Vorspannmittel (15).

4. Fahrzeuggondel (1) nach einem der Ansprüche 2 und 3, **gekennzeichnet dadurch, dass** der oder jeder der niedrige(n) (16) und hohe(n) Anschläge (17) eine Nut (16a, 17a) aufweist, die vorzugsweise V-förmig ist und deren Längsrichtung waagrecht ist und orthogonal zu der Drehachse (A1), und dass das oder jedes Befestigungselement (14) ein freies Ende (14a) von einer Form hat, die konfiguriert ist, damit das Befestigungselement (14) in der Nut (16a, 17b) aufgenommen wird, rotierend um eine waagrechte Achse, die parallel zur Drehachse (A1) ist.

5. Fahrzeuggondel (1) nach einem der Ansprüche 2 bis 4, **gekennzeichnet dadurch, dass** die zweiten Verbindungsmittel (14, 16, 17) zwei niedrige Anschläge (16) umfassen, die an beiden Seiten der Gondel (1) angeordnet werden, und einen einzigen hohen Endanschlag (17), wobei die Haltungsregulierung(4) zwei Befestigungselemente (14) trägt.

6. Fahrzeuggondel (1) nach einem der Ansprüche 2 bis 5, **gekennzeichnet dadurch, dass** die Haltungsregulierung(4) einen Körper (9) umfasst und dass die ersten Verbindungsmittel (7) durch mindestens eine spiralförmige Verbindung (7) gebildet sind, die eine Schraube umfasst (8), die drehbar von besagtem Körper (9) getragen wird und orthogonal zur Längsachse (A2) der Gondel (1) ist, sowie eine Mutter (6), die mit dem zweiten Ende (2d) des Gondelkörpers (2) verbunden und drehfest ist, wobei mindestens eine zweite Motoreinrichtung (10) vorgesehen ist, um die Schraube (n) (8) zu drehen, um die Mutter(n) (6) entlang der Schraube(n) (8) steigen oder sinken zu lassen, je nach der Drehrichtung der Schraube(n) (8), und so den Gondelkörper (2) um die Drehachse (A1) zu drehen, wobei die zweiten Verbindungsmittel (14, 16, 17) von mindestens einer Gleit-Schwenk-Verbindung mit waagrechter Drehachse und parallel zur Drehachse (A1) gebildet sind, und mit waagrechter Verschiebungsrichtung orthogonal zur Drehachse (A1), wobei die mindestens eine Gleit-Schwenk-Verbindung durch den oder die niedrige(n) (16) und hohe (n) Anschläge (17) und das oder die Befestigungselemente (14) gebildet sind.

7. Fahrzeuggondel (1) nach Anspruch 6, **gekennzeichnet dadurch, dass** die ersten Verbindungsmittel (7) zwei spiralförmige Verbindungen (7) umfassen, die symmetrisch zur Längsachse (A2) der Gondel (1) angeordnet sind, wobei die Schrauben (8) mit Mitteln (11, 12) zur Übertragung der Rotation einer der Schrauben (8), gesteuert von der zweiten Motoreinrichtung (10), auf die andere Schraube (8) verbunden sind.

8. Fahrzeuggondel (1) nach einem der Ansprüche 1 bis 7, **gekennzeichnet dadurch, dass** die mindestens eine erste Motoreinrichtung (13) ein linearer Zylinder (13) ist, dessen Körper (13a) und Schaft (13b) an die Karosserie (C) bzw. an die Gondel (1) angelenkt sind, oder umgekehrt, um sich um eine waagrechte Drehachse, parallel zur Drehachse (A1), zu drehen, wobei der Zylinder (13) vorzugsweise und gegebenenfalls mit einer Seite (9a) des Körpers (9) der Haltungsregulierung(4) und einer Seitenwand der Karosserie (C) verbunden ist.

9. Fahrzeuggondel (1) nach Anspruch 8, **gekennzeichnet dadurch, dass** der lineare Zylinder (13) am Auslass in der Position Kopf ausgezogen ist.

10. Fahrzeuggondel (1) nach einem der Ansprüche 2 bis 9, **gekennzeichnet dadurch, dass** das freie Ende (14a) des oder jedes Befestigungselements (14) zulaufend ist, so dass seine obere und untere Seite derart geneigt sind, dass das oder jedes Befestigungselement (14) aus der ausgezogenen Position in die eingezogene Position verschoben wird, wenn es nach einer Drehung der Gondel (1) in Kontakt mit einem niedrigen Endanschlag (16) oder einem hohen Endanschlag (17) kommt.

11. Fahrzeuggondel (1) nach einem der Ansprüche 1 bis 10, **gekennzeichnet dadurch, dass** sie mindestens ein unter Einwirkung der Explosion einer Mine zerbrechliches Mittel umfasst, das die Gondel (1) mit der Karosserie (C) des Fahrzeugs verbindet und vorzugsweise auf Höhe des Befestigungselements (14) oder des betreffenden Endanschlags (16, 17) gelegen ist.

## Claims

1. A vehicle nacelle (1) intended to be occupied by at least one passenger, the nacelle (1) being intended to be connected to the body (C) of the vehicle by a fastening device (5) which is located in the vicinity of a first end (2c) of the nacelle (1), the nacelle (1) comprising at least one passenger seat (3) arranged in the vicinity of a second end (2d) of the nacelle (1), opposite said first end (2c) along a longitudinal axis (A2) of the nacelle (1), wherein the fastening device (5) is configured to allow the nacelle (1) to pivot around a pivoting axis (A1) that is horizontal and orthogonal to the longitudinal axis (A2) of the nacelle (1) and the nacelle (1) comprises at least one first motor means (13) configured to pivot the nacelle (1) around said pivoting axis (A1) in order to raise or lower the second end (2d) of the nacelle (1) with respect to the vehicle body (C) between a lowered position, so-called head-down position, and a raised position, so-called head-out position, wherein the nacelle (1) comprises a nacelle body (2), which carries the passenger seat (3) and to which the fastening device (5) is intended to be connected, and a posture setting device (4) through which the second end (2d) of the nacelle (1) is intended to be connected to the vehicle body (C), **characterised in that** the posture setting device (4) is connected, on one hand, to the nacelle body (2) by first connecting means (7) allowing the nacelle body (2) to pivot around said pivoting axis (A1) without relative vertical movement between the posture setting device (4) and the vehicle body (C) and, on the other hand, to the body (C) by second connecting means (14, 16, 17) allowing, in a release configuration, the nacelle body (2) and the posture setting device (4) to pivot integrally with each other, with respect to the body (C) around the pivoting axis (A1).

2. The vehicle nacelle (1) according to claim 1, **characterised in that** the second connecting means (14, 16, 17) comprise blocking means for blocking the nacelle (1) in any of the head-down position and the head-out position, wherein said blocking means comprise, on one hand, at least one low stop (16) and at least one high stop (17) which are intended to be attached to the vehicle body (C), and, on the other hand, at least one securing member (14) carried by the posture setting device (4) and configured to releasably lock the nacelle (1) to any of the at least one low stop (16) and the at least one high stop (17), the low (16) and high (17) stops being positioned so as to correspond to the head-down position and the head-out position, respectively.

3. The vehicle nacelle (1) according to claim 2, **characterised in that** the or each securing member (14) is movable between an extended position, in which it is able to be engaged within the respective low stop (16) or the respective high stop (17), and a retracted position, in which it is disengaged from the low stop (16) or the high stop (17) to allow the nacelle body (2) and the posture setting device (4) to pivot, integrally with each other, with respect to the body (C), preferably with elastic biasing means (15) for elastically biasing the one or more securing members (14) towards the extended position and with unlocking means operable to move the one or more securing members (14) towards the retracted position, against the action of said elastic biasing means (15).

4. The vehicle nacelle (1) according to one of claims 2 and 3, **characterised in that** the or each of the low (16) and high (17) stops has a groove (16a, 17a), preferably with a V shape, the longitudinal direction of which is horizontal and orthogonal to the pivoting axis (A1), and **in that** the or each securing member (14) has a free end (14a) with a shape that is configured for the securing member (14) to be received within the groove (16a, 17b) in a rotating manner around an axis that is horizontal and parallel to the pivoting axis (A1).

5. The vehicle nacelle (1) according to one of claims 2 to 4, **characterised in that** the second connecting means (14, 16, 17) comprise two low stops (16), intended to be arranged on either side of the nacelle (1), and a single high stop (17), the posture setting device (4) carrying two securing members (14).

6. The vehicle nacelle (1) according to one of claims 2 to 5, **characterised in that** the posture setting device (4) comprises a body (9) and **in that** the first connecting means (7) are formed by at least one helical connection (7) comprising a screw (8), rotatingly carried by said body (9) and orthogonal to the longitudinal axis (A2) of the nacelle (1), and a nut (6) integral with the second end (2d) of the nacelle body (2) and blocked in rotation, wherein at least one second motor means (10) being provided, for rotating the one or more screws (8) in order to raise or lower the one or more nuts (6) along the one or more screws (8), in accordance with the direction of rotation of the one more screws (8), and to thus pivot the nacelle body (2) around the pivoting axis (A1), wherein the second connecting means (14, 16, 17) are formed by at least one sliding pivot connection with a pivoting axis that is horizontal and parallel to the pivoting axis (A1) and with a translation direction that is horizontal and orthogonal to the pivoting axis (A1), wherein said at least one sliding pivot connection is formed by the low (16) and high (17) stops and the one or more securing members (14).

7. The vehicle nacelle (1) according to claim 6, **characterised in that** the first connecting means (7) comprise two helical connections (7) symmetrically arranged with respect to the longitudinal axis (A2) of the nacelle (1), the screws (8) being connected by means (11, 12) for transmitting the rotation of one of the screws (8), controlled by the second motor means (10), to the other screw (8).

8. The vehicle nacelle (1) according to one of claims 1 to 7, **characterised in that** the at least one first motor means (13) is a linear cylinder (13) the body (13a) and the rod (13b) of which are respectively hinged to the body (C) and the nacelle (1), or vice versa, so as to be able to rotate around a pivoting axis that is horizontal and parallel to the pivoting axis (A1), wherein the cylinder (13) is connected, preferably and if applicable, to one side (9a) of the body (9) of the posture setting device (4) and to a sidewall of the body (C).

9. The vehicle nacelle (1) according to claim 8, **characterised in that** the linear cylinder (13) is in the exhaust position in the head-out position.

10. The vehicle nacelle (1) according to one of claims 2 to 9, **characterised in that** the free end (14a) of the or each securing member (14) is tapered, thereby exhibiting upper and lower sides that are sloped such that the or each securing member (14) is moved from the extended position to the retracted position when it contacts a low stop (16) or a high stop (17) following a pivoting of the nacelle (1).

11. The vehicle nacelle (1) according to one of claims 1 to 10, **characterised in that** it comprises at least one means breakable under the action of a mine shock, the breakable means securing the nacelle (1) to the vehicle body (C), the breakable means being located preferably at the securing member (14) or at the associated stop (16, 17) .
